# EUROPÄISCHE PATENTANMELDUNG

(11) **EP 0 568 917 A1**
(43) Veröffentlichungstag der Anmeldung: **10.11.1993**
(21) Anmeldenummer: 93106903.3
(22) Anmeldetag: 28.04.1993
(51) Int. Cl.: C08L 101/00, C08L 79/08, C08L 67/03, C08L 65/00

(54) **Mischungen aus Polyarylensiloxanen und amorphen Hochleistungspolymeren und deren Verwendung**

(30) Priorität: 08.05.1992 DE 4215139
(71) Anmelder: HOECHST AKTIENGESELLSCHAFT, D-65926 Frankfurt am Main (DE)
(72) Erfinder: Herrmann-Schönherr, Otto, Dr., W-6140 Bensheim (DE); Land, Horst-Tore, Dr., W-6230 Frankfurt am Main 80 (DE)

(57) **Zusammenfassung**

Thermoplastisch verarbeitbare Mischung mit einer Wärmeformbeständigkeit von größer 150°C, enthaltend
a) mindestens ein amorphes, thermoplastisch verarbeitbares Polymeres mit einer Wärmeformbeständigkeit von größer als 150°C,
b) mindestens ein Polyarylensiloxan der Formel (I) 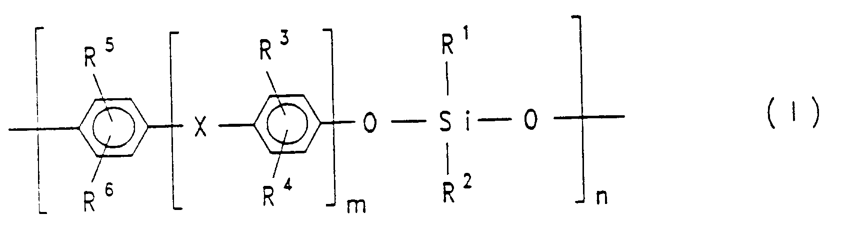 wobei die Symbole R¹, R², R³, R⁴, R⁵, R⁶, X, m und n die folgende Bedeutung haben:
   R¹ und R² sind gleich oder verschieden und stehen unabhängig voneinander für einen Alkyl-, Aryl- oder Vinylrest.
   R³, R⁴, R⁵, R⁶ sind gleich oder verschieden und stehen unabhängig voneinander für Wasserstoff einen Alkyl- oder Arylrest.
   X steht für eine Gruppe 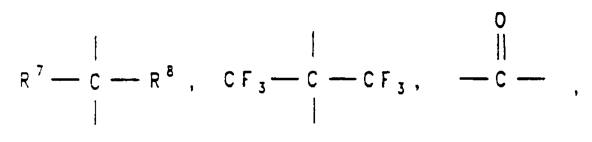 -SO₂- oder für Sauerstoff oder Schwefel oder für eine Bindung, R⁷ und R⁸ bedeuten unabhängig voneinander Wasserstoff einen (Cyclo)-Alkyl- oder Arylrest.
   m ist Null oder 1 und n ist eine natürliche Zahl zwischen 2 und 100.
   Durch niedrige Schmelzviskositäten und eine hohe Wärmeformbeständigkeit sind die erfindungsgemäßen Mischungen in idealer Weise zur Herstellung von Formkörpern geeignet.

## Beschreibung

Amorphe Thermoplaste mit einer Wärmeformbeständigkeit von größer als 150°C werden als amorphe Hochleistungspolymere bezeichnet. Sie haben erhebliche Bedeutung als Werkstoffe, insbesondere in der Mikroelektronik, gewonnen. In diesem Bereich wird vielfach die Herstellung von kleinen Formteilen durch Spritzguß angestrebt. Wünschenswert sind für eine Verarbeitung von Thermoplasten zu feinen Spritzgußteilen Schmelzviskositäten von kleiner 150 Pas. Derartige Werte werden bisher nur von flüssigkristallinen Hauptkettenpolymeren (siehe z.B. D.E. Turek, G.P. Simon; Polym. Int. 27 (1992) 1865 und US-A 4,386,174) und teilkristallinen Polymeren, wie Polyphenylensulfid (PPS), oberhalb der Schmelztemperatur (siehe z.B. DE-A 38 08 079) erreicht. Für amorphe Hochleistungspolymere konnten derartig niedrige Schmelzviskositäten unter Erhalt einer entsprechend hohen Wärmeformbeständigkeit noch nicht erzielt werden. Hier konnten bisher lediglich Schmelzviskositäten von größer als 200 Pas bei der Verarbeitungstemperatur eingestellt werden (siehe z.B. W.L. Liu, J.T. Hu, C.C.M. Ma, L.T. Hsiue, MRL Bull. Res. Des. 1 (1987) 9).

Es war jedoch wünschenswert, namentlich amorphe Hochleistungspolymere so zu modifizieren, daß sie unter den Verarbeitungsbedingungen Schmelzviskositäten von weniger als 150 Pas aufweisen und gleichzeitig eine Wärmeformbeständigkeit von größer als 150°C behalten, da flüssigkristalline Hauptkettenpolymere den Nachteil einer starken Anisotropie in ihren mechanischen Eigenschaften besitzen und teilkristalline Polymere, wie PPS, beim Abkühlen wegen der Rekristallisation zu einem starken Verziehen in der Spritzgußform neigen, was bei feinen Spritzgußteilen natürlich besonders nachteilig ist.

Die meisten bisher bekannten Additive zur Herabsetzung der Viskosität von Polymerschmelzen, wie sie z.B. aus US-A 4,189,411 bekannt sind, besitzen den Nachteil, daß sie bei den hohen Verarbeitungstemperaturen für amorphe Hochleistungspolymere (>350°C) nicht beständig sind.

Aus der DE-A-28 32-342 ist es bekannt, Polyarylensiloxane als Plastifizierungsmittel für Polycarbonate einzusetzen. Als Nachteil tritt jedoch ein starker Abfall der Glasübergangstemperatur auf, so daß die Wärmeformbeständigkeit der resultierenden Formmassen unzureichend ist.

Es wurde nun gefunden, daß durch den Zusatz von bestimmten Polyarylensiloxanen zu amorphen Hochleistungspolymeren deren Schmelzviskosität auf Werte unter 150 Pas, im allgemeinen sogar unter 100 Pas, herabgesetzt wird, während die resultierenden Formmassen noch bei Temperaturen von mehr als 150°C wärmeformbeständig sind.

Gegenstand der Erfindung ist daher eine thermoplastisch verarbeitbare Mischung mit einer Wärmeformbeständigkeit von größer 150°C, enthaltend
a) mindestens ein amorphes, thermoplastisch verarbeitbares Polymer mit einer Wärmeformbeständigkeit von größer als 150°C,
b) mindestens ein Polyarylensiloxan der Formel (I) 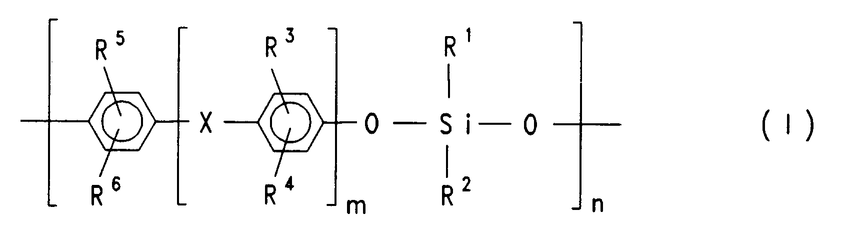 wobei die Symbole R¹, R², R³, R⁴, R⁵, R⁶, X, m und n die folgende Bedeutung haben:
   R¹ und R² sind gleich oder verschieden und stehen unabhängig voneinander für einen geradkettigen oder verzweigten C₁-C₁₂-Alkylrest, einen substituierten oder unsubstituierten C₆-C₁₄-Arylrest oder einen gegebenenfalls substituierten Vinylrest,
   R³, R⁴, R⁵ und R⁶ sind gleich oder verschieden und stehen unabhängig voneinander für Wasserstoff, einen verzeigten oder unverzweigten C₁-C₃-Alkylrest oder einen substituierten oder unsubstituierten C₆-C₁₄-Arylrest, X steht für eine Gruppe 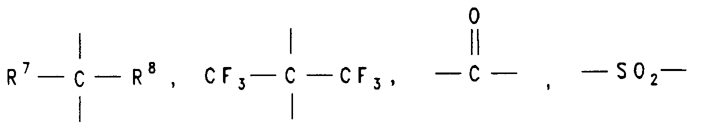 oder für Sauerstoff oder Schwefel oder für eine Bindung,
   R⁷ und R⁸ bedeuten unabhängig voneinander Wasserstoff oder einen verzweigten oder unverzweigten C₁-C₆-Alkyl-, oder C₆-C₁₄-Aryl- oder einen substituierten oder unsubstituierten C₃-C₉-Cycloalkylrest,
   der Index m ist Null oder 1, und n ist eine natürliche Zahl zwischen 2 und 100.

Durch niedrige Schmelzviskositäten und eine hohe Wärmeformbeständigkeit sind die erfindungsgemäßen Mischungen in idealer Weise zur Herstellung von Formkörpern geeignet.

Amorphe Hochleistungspolymere sind amorphe Thermoplaste mit einer Wärmeformbeständigkeit von >150°C. Der Begriff Wärmeformbeständigkeit ist in der DIN Norm DIN 53 460 und der entsprechenden ASTM Norm D 1525 definiert und wird im Sinne dieser Normen verstanden. Beispiele für Verbindungsklassen, die diese Anforderungen erfüllen, sind Polyarylate, bestimmte Polyimide, bestimmte statistische Cycloolefincopolymere und Polyethersulfone. Bevorzugt Verwendung finden Polyarylate, Polyetherimide, Cycloolefincopolymere oder Mischungen aus diesen.
Die Mischungen gemäß der Erfindung enthalten z.B. Polyimide mit Wiederholeinheiten der folgenden Formel II 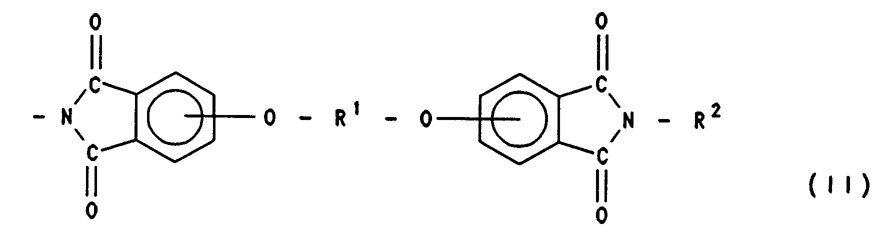
wobei R¹ ausgewählt ist aus
(α) einem substituierten oder unsubstituierten aromatischen Rest der folgenden Formeln 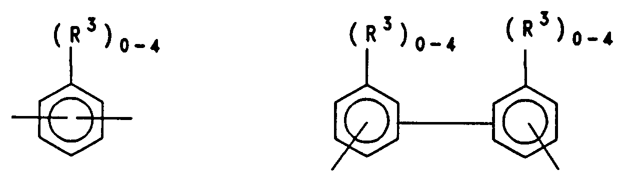 oder
(β) einem zweiwertigen Rest der allgemeinen Formel

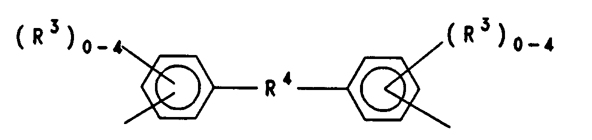

wobei R³ steht für C₁-6₆-Alkyl oder Halogen, und R⁴ steht für -O-, -S-,-CO-, -SO₂-, -SO-, Alkylen und Alkyliden mit jeweils 1 bis 6 Kohlenstoffatomen oder Cycloalkylen und Cycloalkyliden mit jeweils 4 bis 8 Kohlenstoffatomen.

R² ist ein aromatischer Kohlenwasserstoffrest mit 6 bis 20, vorzugsweise 6 bis 12 Kohlenstoffatomen, oder ein halogen- oder alkylsubstituiertes Derivat davon, wobei die Alkylgruppe 1 bis 6 Kohlenstoffatome enthält, ein Alkylen- oder Cycloalkylenrest mit 2 bis 20, vorzugsweise 2 bis 6 Kohlenstoffatomen oder ein zweiwertiger Rest der Formel 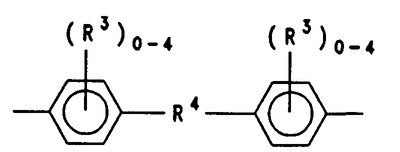
wobei R³ und R⁴ die obige Bedeutung haben und R⁴ auch eine direkte Bindung sein kann.

Weitere Polyimide, die für die Zwecke der Erfindung nützlich sind, umfassen solche mit folgenden Wiederholeinheiten der Formel 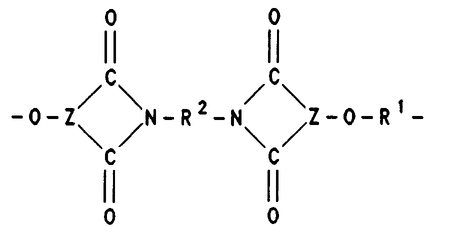
in der R¹ und R² wie oben definiert sind und wobei
-0-Z〈 fuer 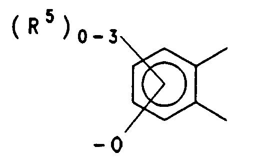
steht, wobei R⁵, gleich oder verschieden, Wasserstoff, Alkyl oder Alkoxy mit 1 bis 6 C-Atomen bedeutet, oder 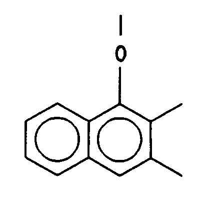
oder 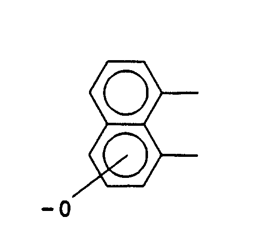
bedeutet, wobei der Sauerstoff mit einem der Ringe verknüpft ist und in ortho- oder para-Stellung zu einer der Bindungen der Imidcarbonylgruppe steht.

Bevorzugte Polyimide im Sinne der Erfindung sind solche mit folgenden Wiederholeinheiten 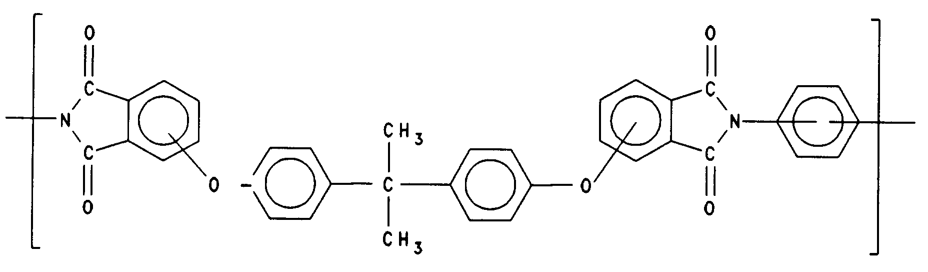
Der Begriff Polyimide, wie er hier verwendet wird, schließt Homopolymere, Copolymere, Terpolymere und Blockcopolymere ein. Die Staudingerindizes der verwendeten Polyimide liegen zwischen 0,1 und 3, bevorzugt zwischen 0,3 und 1,5 und insbesondere zwischen 0,3 und 1 dl/g, gemessen bei 25°C, beispielsweise in N-Methylpyrrolidon oder Methylenchlorid.

Die Polyimide, die gemäß der vorliegenden Erfindung eingesetzt werden, sind bekannt. Ihre Synthese ist beispielsweise beschrieben in den folgenden US-Patentschriften: US-A 3,847,867; 3,847,869; 3,850,885; 3,852,242; 3,855,178; 3,887,558; 4,017,511; 4,024,110 und 4,250,279.

Polyarylate sind Polyester aus aromatischen Säure- und aromatischen Alkoholkomponenten. Als Bausteine kommen alle aromatischen Dicarbonsäuren, -Hydroxycarbonsäuren und -Dihydroxyverbindungen in Frage, wie Phthalsäure, Isophthalsäure, Terephthalsäure, 2,6-Naphthalindicarbonsäure, 4,4'-Diphenyldicarbonsäure, 4,4'-Dicarboxy-diphenylether, 4,4'-Dicarboxybenzophenon, 2,2-Bis-(4-carboxyphenyl)-propan, 2,2-Bis-(4-carboxyphenyl)-methan, Salicylsäure, 4-Hydroxybenzoesäure, 6-Hydroxynaphthalin-2-carbonsäure, Brenzcatechin, Resorcin, Hydrochinon, Bisphenol A, Bisphenol F, Bisphenol Z, 4,4'-Dihydroxydiphenylether, 4,4'-Dihydroxydiphenyl, 4,4'-Dihydroxy-benzophenon. Bevorzugt ist der Einsatz einer Mischung von Terephthalsäure, Isophthalsäure und Bisphenol A. Die Darstellung der Polyarylate erfolgt nach literaturbekannten Synthesen und ist z.B. in US-A 3,317,464 und US-A 3,780,148 beschrieben.

Die Polyarylate können auch Polyestercarbonate sein, deren Synthesen beispielsweise in US-A 3,030,331; US-A 3,169,121; US-A 4,194,038 und US-A 4,156,069 beschrieben sind. Es handelt sich um Copolyester, enthaltend Carbonatgruppen, Carboxylatgruppen und aromatische Gruppen, wobei wenigstens einige der Carboxylgruppen und wenigstens einige der Carbonatgruppen direkt mit den Ring-Kohlenstoffatomen der aromatischen Gruppen verbunden sind. Diese Polymere werden üblicherweise hergestellt durch Reaktion von difunktionellen Carbonsäuren mit Dihydroxyphenolen und Carbonatvorstufen.

Die Staudinger-Indices der erfindungsgemäß eingesetzten Polyarylate liegen bevorzugt zwischen 0,1 und 2,0, insbesondere 0,3 und 1,2 dl/g, gemessen bei 25°C in Dichlormethan.

Bei den verwendeten statistischen Cycloolefin Copolymeren handelt es sich vorzugsweise um Materialien welche aus mindestens einem Polycycloolefin der allgemeinen Formel (III) bis (VIII) 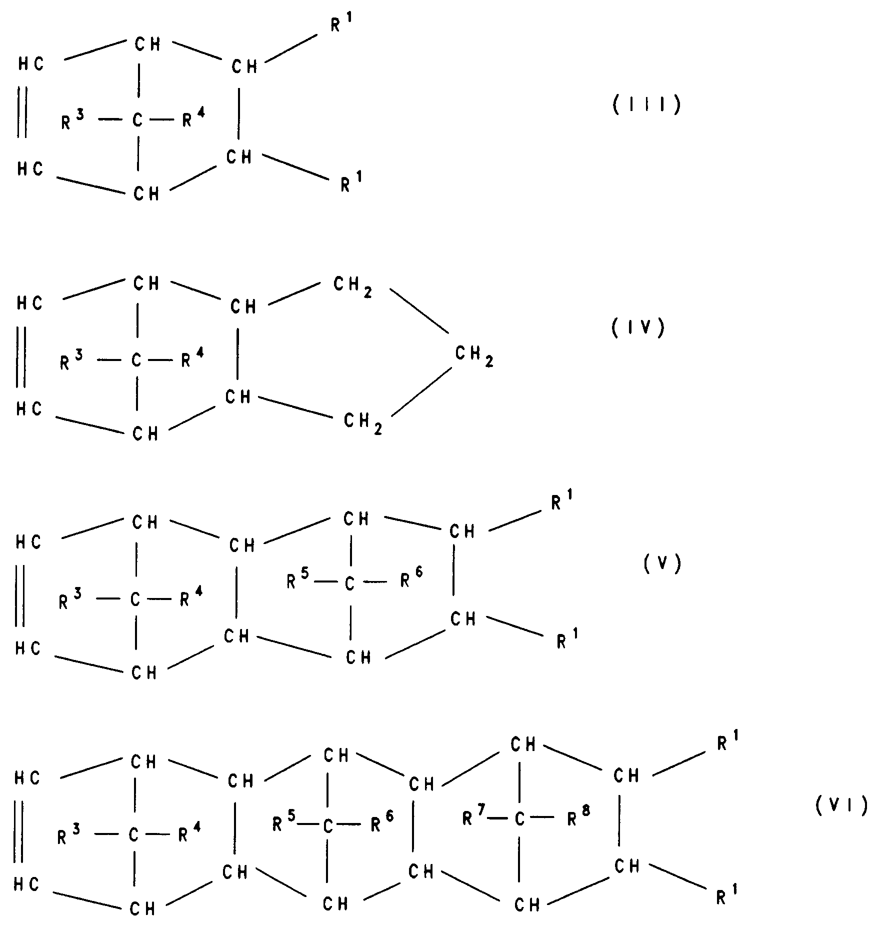 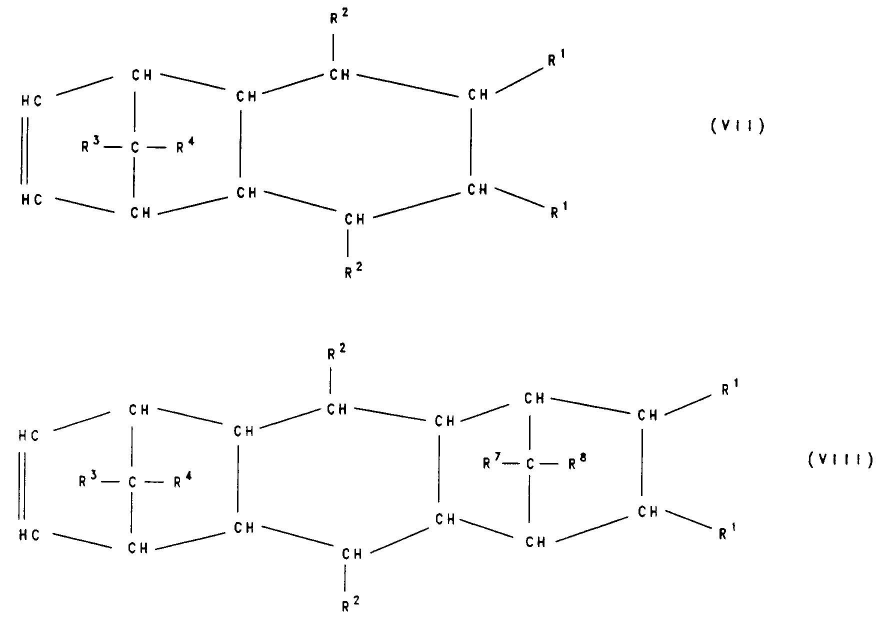
worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, und mindestens einem Olefin, das ausgewählt wird aus der Gruppe der Monocycloolefine der Formel (IX) 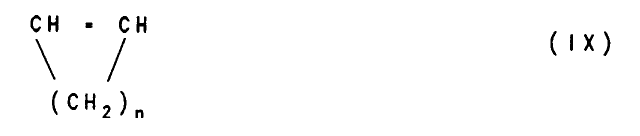
worin n eine Zahl von 2 bis 10 ist, und/oder der Gruppe der acyclischen Olefine der Formel (X) 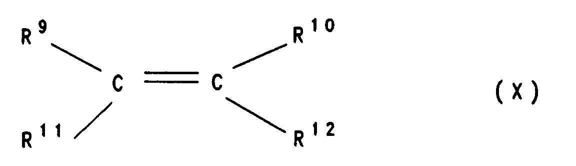
worin R⁹, R¹⁰, R¹¹ und R¹² gleich oder verschieden sind und ein Wasserstoffatom oder einen C₁-C₈-Alkylrest oder C₆-C₁₂-Arylrest bedeuten, aufgebaut sind. Das Monomer VIII soll vorzugsweise, das Monomer VII kann zusätzlich vorhanden sein.

Die bevorzugt eingesetzten statistischen Cycloolefincopolymere weisen bevorzugt Staudingerindices von 0,1 bis 10 dl/g (gemessen in Dekalin bei 135°C), besonders bevorzugt von 0,2 dl/g bis 5 dl/g auf.

Die erfindungsgemäß eingesetzten Polyarylensiloxane sind Verbindungen der Formel 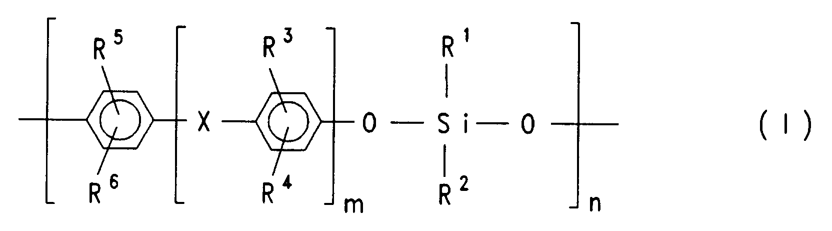
wobei die Symbole R¹, R², R³, R⁴, R⁵, R⁶, X, m und n die folgende Bedeutung haben:
R¹ und R² sind gleich oder verschieden und stehen unabhängig voneinander für einen geradkettigen oder verzweigten C₁-C₁₂-Alkylrest, einen substituierten oder unsubstituierten C₆-C₁₄-Arylrest oder einen gegebenenfalls substituierten Vinylrest, vorzugsweise für einen C₁ bis C₃ Alkylrest oder für einen Phenyl- oder Vinylrest.

R³, R⁴, R⁵ und R⁶ sind gleich oder verschieden und stehen unabhängig voneinander für Wasserstoff, einen verzweigten oder unverzweigten C₁-C₃-Alkylrest oder einen substituierten oder unsubstituierten C₆-C₁₄₋Arylrest. -X- steht für eine Gruppe 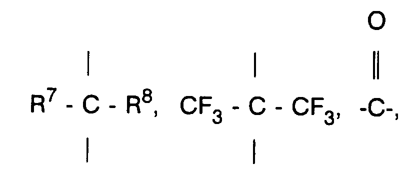
-SO₂- oder für Sauerstoff oder Schwefel oder für eine Bindung.

Bevorzugt ist X eine Gruppe 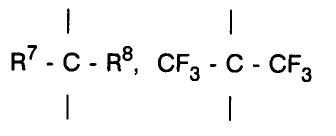
oder eine Bindung.

R⁷ und R⁸ bedeuten unabhängig voneinander Wasserstoff oder einen verzweigten oder unverzweigten C₁-C₆-Alkyl-, oder C₆-C₁₄-Aryl- oder einen substituierten oder unsubstituierten C₃-C₉-Cycloalkylrest. Der Index m ist Null oder 1.

Der Polymerisationsgrad n liegt im Bereich von 2 bis 100, vorzugsweise im Bereich von 2 bis 30.

Die Verbindungen der Formel (I) sind aus der EP-A- 0 398 049 und der EP-A- 0 030 817 als schwer entflammbare, mit Hilfe der Spritzgußtechnik verarbeitbare Thermoplasten und Dielektrika sowie als Materialien für lichtelektrisch leitende Schichten bekannt.

Die Herstellung der Polyarylensiloxane erfolgt in bekannter Weise nach üblichen Kondensationsverfahren, wie beispielsweise Lösungskondensation, Schmelzkondensation und Grenzflächenkondensation, aus Dihalogensilanen der Formel (XI) und Polyolen der Formel (XII) 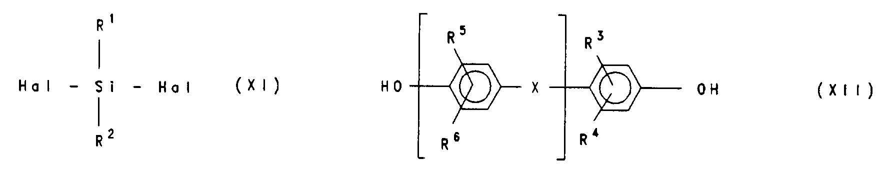
nach einem Einstufenverfahren. Die Reste R¹ und R² in der Formel (XI) können hierbei gleich oder verschieden sein und stehen unabhängig voneinander für einen geradkettigen oder verzweigten C₁-C₁₂-Alkylrest, einen substituierten oder unsubstituierten C₆-C₁₄-Arylrest oder einen gegebenenfalls substituierten Vinylrest. Der Rest Hal steht vorzugsweise für Chlor oder Brom, besonders bevorzugt für Chlor.

R³, R⁴, R⁵ und R⁶ sind in der Formel (XII) gleich oder verschieden und stehen unabhängig voneinander für Wasserstoff, einen C₁-C₃-Alkylrest oder einen substituierten oder unsubstituierten C₆-C₁₄-Arylrest.

m ist null oder 1,
-X- steht in der Formel (XII) für eine Gruppe 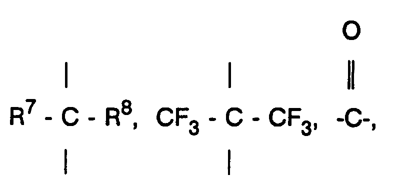
-SO₂- oder für Sauerstoff oder Schwefel oder für eine Bindung,
wobei R⁷ und R⁸ unabhängig voneinander Wasserstoff oder einen verzweigten oder unverzweigten C₁-C₆-Alkyl- oder C₆-C₁₄-Aryl- oder einen C₃-C₉-Cycloalkylrest bedeuten.

Als Komponenten (XI) und (XII) kommen bevorzugt solche Verbindungen in Frage, welche sich in den bekannten organischen Lösemitteln lösen.

Beispiele für Verbindungen der Formel (XI) sind Dimethyldichlorsilan, Methylethyldichlorsilan, Methylvinyldichlorsilan, Dimethyldibromsilan, Divinyldichlorsilan, Diethyldichlorsilan, Diisopropyldichlorsilan, Diphenyldichlorsilan und Phenylmethyldichlorsilan.

Als Verbindungen der Formel (XII) kommen beispielsweise Bisphenol A, Bisphenol Z, Hexafluorbisphenol A, 4,4'-Dihydroxybiphenyl, 2,2'-Dihydrorybiphenyl, 4,4'-Dihydroxydiphenylether, Hydrochinon, 2,5-Dihydroxybiphenyl, 1,1'-Bis-(4-hydroxyphenyl)-cyclohexan und Dihydroxydiphenylsulfon in Frage.

Die Verbindungen der Formeln (XI) und (XII) werden in einem Molverhältnis von 0,8:1,2 bis 1,2:0,8 eingesetzt, vorzugsweise in einem Molverhältnis von 1:1.

Es können auch Gemische von Verbindungen der Formel (XI) und (XII) eingesetzt werden. Mögliche Kombinationen sind beispielsweise
a) Bisphenol A: Dimethyldichlorsilan:Methylvinyldichlorsilan
b) Bisphenol A: Hexafluorbisphenol A:Methylvinyldichlorsilan
c) Bisphenol A: Hexafluorbisphenol A:Methylvinyldichlorsilan: Dimethyldichlorsilan
d) Hexafluorbisphenol A:Dimethyldichlorsilan:Diphenyldichlorsilan
e) Bisphenol A:Methylethyldichlorsilan:Divinyldichlorsilan
Weiterhin können die erfindungsgemäß eingesetzten Polyarylensiloxane auch Copolymere sein, die sich von einer beliebigen Anzahl an Einheiten der Formel (XI) und (XII) ableiten.

Bevorzugt sind Polyarylensiloxane mit einem mittleren Molgewicht (Mₙ) von 600-25000, insbesondere 800-10000 g/mol.

Die erfindungsgemäßen Mischungen von amorphen Hochleistungspolymeren und Polyarylensiloxanen enthalten eine oder mehrere amorphe Hochleistungspolymer-Komponente und eine oder mehrere Polyarylensiloxan-Komponente. Vorzugsweise enthält die Mischung 0,1-15, insbesondere 0,5 bis 5 Gew.-% an Polyarylensiloxanen, bezogen auf die Summe dieser Komponenten.

Das Mischen der Komponenten erfolgt durch beliebige mechanische Verfahren, vorzugsweise werden die Komponenten einzeln in einen Extruder gegeben und dort unmittelbar vor dem Extrudieren gemischt.

Die erfindungsgemäßen Mischungen werden zur Herstellung von Formteilen, vorzugsweise im Spritzgußverfahren, verwendet. Diese Formteile finden insbesondere Anwendung im Gerätebau, z.B. für Mikrowellenherd-Innenteile, Toaster, Bügeleisen, bruchsichere Operationslampen und medizinische Geräte, die sterilisierbar sein müssen oder brandsicher, in der Elektrotechnik und Elektronik, z.B. für Hochspannungsschutzschalter- und Messersicherungs-Gehäuse, miniaturisierte Hochleistungs- und Vielfachstecker u.a. für Raumfahrtgeräte, schwall-Iöt beständige Klemmleisten und Bauteile integrierter Schaltungen, Chip-Träger für HT-Prüfungen, im Kraftfahrzeugbau, z.B. für Getriebeteile, Kolben- und Bremszylindermäntel, Vergasergehäuse, Ventildeckel, Scheinwerfer und im Flugzeugbau, z.B. für freitragende Sitzschalen, Sicherheitsgurtschlösser und Verkabelungen.

Die Erfindung wird durch die Beispiele näher erläutert.

### Beispiele

Folgende Polymere werden in den einzelnen Beispielen eingesetzt:
Ein Polyetherimid (PEI) (^{R}Ultem, Firma GE-Plastics, M_{w} 31 800 g/mol, Mₙ 15 200 g/mol) mit einem Staudingerindex von 0,5 dl/g, gemessen bei 25°C in Chloroform, das Wiederholeinheiten der folgenden Formel enthält: 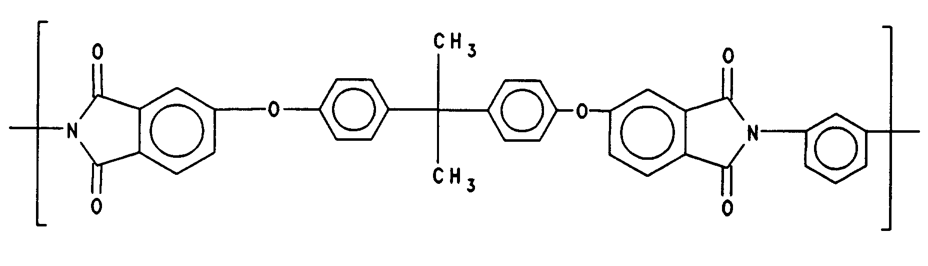
Ein Polyarylester (PAR) (^{R}Ardel, Firma Amoco, Mₙ 17 300 g/mol) mit einem Staudingerindex von 0,55 dl/g, gemessen in Methylenchlorid bei 25°C, der Wiederholeinheiten der folgenden Formel enthält: 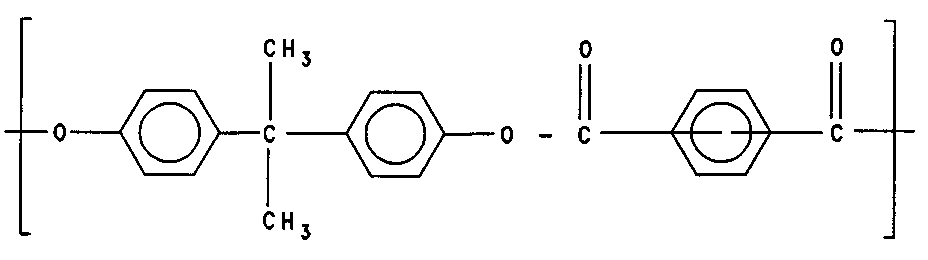
Ein Polyarylensiloxan (PAS), das zwischen 3 und 30 Wiederholeinheiten der folgenden Formel enthält: 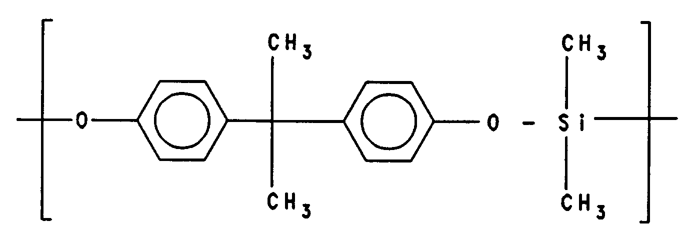
Bei dem Cycloolefincopolymeren handelt es sich um ein statistisches Copolymer aus Norbornen und Ethylen mit einer Glastemperatur von 182°C (Mₙ = 58 100 g/mol, M_{w} = 98 600 g/mol und einem Staudingerindex von 0,73 dl/g (gemessen bei 135°C in Dekalin).

Die angeführten Polymere werden zunächst getrocknet (120°C, 24 h, verminderter Druck) und anschließend in verschiedenen Gewichtsverhältnissen in einem Meßextruder unter Schutzgas extrudiert (Fa. HAAKE, Rheocord System 90/Rheomex 600, Karlsruhe, Bundesrepublik Deutschland). Als Inertgas wird Argon eingesetzt. Die erhaltenden Extrudate werden auf ihre physikalischen Eigenschaften hin untersucht.

Die Bestimmung der Glastemperatur erfolgt mit einem Differentialkalorimeter DSC-7 der Fa. Perkin Elmer (Überlingen, Bundesrepublik Deutschland), die Schmelzviskositäten werden mit einem Rheometer RDS-300 (Fa. Rheometrics, Frankfurt, Bundesrepublik Deutschland) bestimmt.

Die mechanischen Werte wurden mit einer Zugprüfmaschine Instron 4302 (Fa. Instron, Offenbach, Bundesrepublik Deutschland) und einem Schlagprüfgerät (Fa. Zwick, Nürnberg, Bundesrepublik Deutschland) bestimmt.

Es werden die in Tabelle 1 und 2 aufgeführten Zusammensetzungen untersucht: Alle in den Tabellen aufgeführten Prozentangaben, die sich auf die Zusammensetzung von Mischungen beziehen, sind Gewichtsprozente.

**Tabelle 1**

| Schmelzviskosität und Glastemperatur von Mischungen aus Polyarylensiloxan (PAS) und Polyarylat (PAR) (mit V gekennzeichnete Beispiele sind Vergleichsbeispiele) | | | | |
|---|---|---|---|---|
| Bsp.Nr. | % PAR | % PAS | Tg/°C | Schmelzviskosität Pas (360°C; 500 rad/s) |
| V1 | 100 | 0 | 189 | 350 |
| 1 | 99 | 1 | 185 | 98 |
| 2 | 95 | 5 | 175 | 35 |

**Tabelle 2**

| Schmelzviskosität und Glastemperatur von Mischungen aus Polyetherimid (PEI), Polyarylat (PAR) und Polyarylensiloxan (PAS) | | | | | |
|---|---|---|---|---|---|
| Bsp.Nr. | % PEI | % PAR | % PAS | Tg/°C | Schmelzviskosität Pas (360°C; 500 rad/s) |
| V2 | 50 | 50 | 0 | 203 | 310 |
| 3 | 49 | 49 | 2 | 182/196 | 61 |
| 4 | 45 | 45 | 10 | 173/193 | 22 |

**Tabelle 3**

| Schmelzviskosität und Glastemperatur von Mischungen aus Polyetherimid (PEI) und Polyarylensiloxan (PAS) | | | | |
|---|---|---|---|---|
| Bsp.Nr. | % PEI | % PAS | Tg/°C | Schmelzviskosität Pas (360°C; 500 rad/s) |
| V3 | 100 | 0 | 217 | 470 |
| 5 | 99 | 1 | 215 | 91 |

**Tabelle 4**

| Schmelzviskosität und Glastemperatur von Mischungen aus Cycloolefincopolymer (COC) und Polyarylensiloxan (PAS) | | | | |
|---|---|---|---|---|
| Bsp.Nr. | % COC | % PAS | Tg/°C | Schmelzviskosität Pas (360°C; 500 rad/s) |
| V4 | 100 | 0 | 182 | 287 |
| 6 | 99 | 1 | 181 | 97 |

Wie aus den Tabellen 1 bis 4 hervorgeht, gelingt es, die Schmelzviskosität der entsprechenden Formmassen deutlich abzusenken, während gleichzeitig eine Wärmeformbeständigkeit von deutlich größer 150°C erhalten wird.

Zudem zeigt sich, daß die günstigen mechanischen Eigenschaften der amorphen Hochleistungspolymeren auch nach Zusatz der viskositätserniedrigenden Polyarylensiloxane erhalten bleiben. Entsprechende Meßwerte sind in den Tabellen 5 bis 7 zusammengestellt.

**Tabelle 5**

| Mechanische Eigenschaften von Polyarylester/Polyarylensiloxan-Mischungen | | | | | |
|---|---|---|---|---|---|
| Bsp.Nr. | % PAR | % PAS | Zug-E-Modul GPa | Reiß-dehnung (%) | Kerbschlagzähigkeit (IZOD; J/m) |
| V1 | 100 | 0 | 2,0 | 48 | 223 |
| 1 | 99 | 1 | 2,0 | 39 | 150 |

**Tabelle 6**

| Mechanische Eigenschaften von Polyetherimid/Polyarylensiloxan-Mischungen | | | | | |
|---|---|---|---|---|---|
| Bsp.Nr. | % PEI | % PAS | Zug-E-Modul GPa | Reiß-dehnung (%) | Kerbschlagzähigkeit (IZOD; J/m) |
| V3 | 100 | 0 | 3,05 | 9 | 50 |
| 5 | 99 | 1 | 2,83 | 8 | 51 |

**Tabelle 7**

| Mechanische Eigenschaften von Cycloolefincopolymer/Polyarylenslioxan-Mischungen | | | | | |
|---|---|---|---|---|---|
| Bsp.Nr. | % COC | % PAS | Zug-E-Modul GPa | Reiß-dehnung (%) | Kerbschlagzähigkeit (IZOD; J/m) |
| V4 | 100 | 0 | 3,46 | 3,5 | 35 |
| 6 | 99 | 1 | 3,40 | 3,6 | 32 |

## Patentansprüche

1. Thermoplastisch verarbeitbare Mischung mit einer Wärmeformbeständigkeit von größer 150°C, enthaltend
a) mindestens ein amorphes, thermoplastisch verarbeitbares Polymeres mit einer Wärmeformbeständigkeit von größer als 150°C,
b) mindestens ein Polyarylensiloxan der Formel (I), 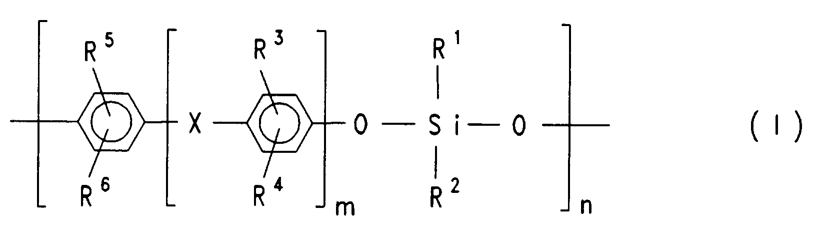 wobei die Symbole R¹, R², R³, R⁴, R⁵, R⁶, X, m und n die folgende Bedeutung haben:
R¹ und R² sind gleich oder verschieden und stehen unabhängig voneinander für einen geradkettigen oder verzweigten C₁-C₁₂-Alkylrest, einen substituierten oder unsubstituierten C₆-C₁₄-Arylrest oder einen gegebenenfalls substituierten Vinylrest,
R³, R⁴, R⁵ und R⁶ sind gleich oder verschieden und stehen unabhängig voneinander für Wasserstoff, einen verzweigten oder unverzweigten C₁-C₃-Alkylrest oder einen substituierten oder unsubstituierten C₆-C₁₄-Arylrest,
X steht für eine Gruppe 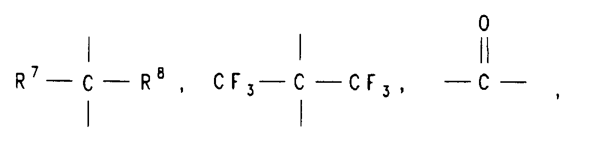 -SO₂- oder für Sauerstoff oder Schwefel oder für eine Bindung,
R⁷ und R⁸ bedeuten unabhängig voneinander Wasserstoff oder einen verzweigten oder unverzweigten C₁-C₆-Alkyl-, oder C₆-C₁₄-Aryl- oder einen substituierten oder unsubstituierten C₃-C₉-Cycloalkylrest, der Index m ist Null oder 1 und n ist eine natürliche Zahl zwischen 2 und 100.

2. Mischung nach Anspruch 1, dadurch gekennzeichnet, daß die amorphe, thermoplastisch verarbeitbare Polymerkomponente (a) aus
(A) einem oder mehreren Polyimiden mit Wiederholeinheiten der Formel II 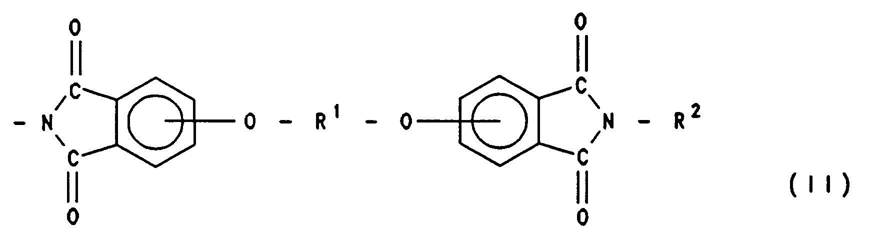 wobei R¹ ausgewählt ist aus
(α) einem substituierten oder unsubstituierten aromatischen Rest der folgenden Formeln 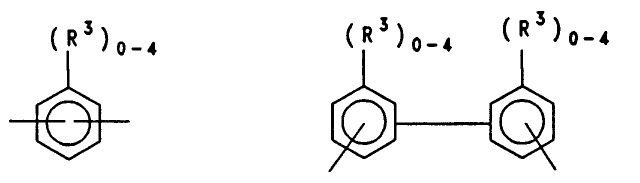 oder
(β) einem zweiwertigen Rest der allgemeinen Formel 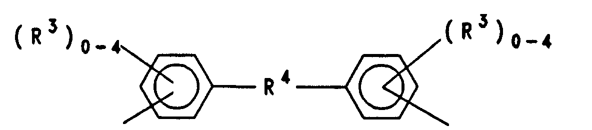
wobei R³ steht für C₁-C₆-Alkyl oder Halogen, und R⁴ steht für -O-, -S-,-CO-, -SO₂-, SO-, Alkylen und Alkyliden mit jeweils 1 bis 6 Kohlenstoffatomen oder Cycloalkylen und Cycloalkyliden mit jeweils 4 bis 8 Kohlenstoffatomen und R² steht für einen aromatischen Kohlenwasserstoffrest mit 6 bis 20, vorzugsweise 6 bis 12 Kohlenstoffatomen, oder ein halogen- oder alkylsubstituiertes Derivat davon, wobei die Alkylgruppe 1 bis 6 Kohlenstoffatome enthält, ein Alkylen- oder Cycloalkylenrest mit 2 bis 20, vorzugsweise 2 bis 6 Kohlenstoffatomen oder ein zweiwertiger Rest der Formel 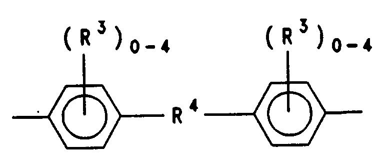 wobei R³ und R⁴ die obige Bedeutung haben und R⁴ auch eine direkte Bindung sein kann, oder
(B) aus einem oder mehreren Polyarylaten oder
(C) aus Mischungen von (A) und (B) oder
(D) aus einem oder mehreren statistischen Cycloolefincopolymeren welche aus mindestens einem Polycycloolefin der allgemeinen Formel (III) bis (VIII) 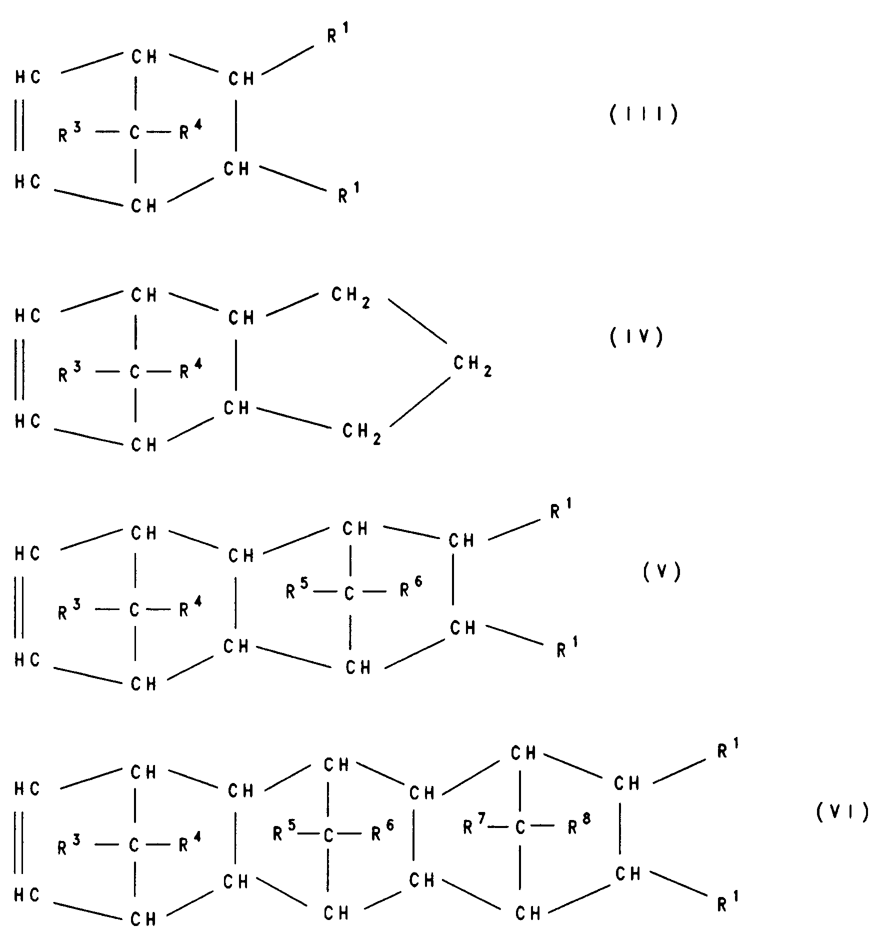 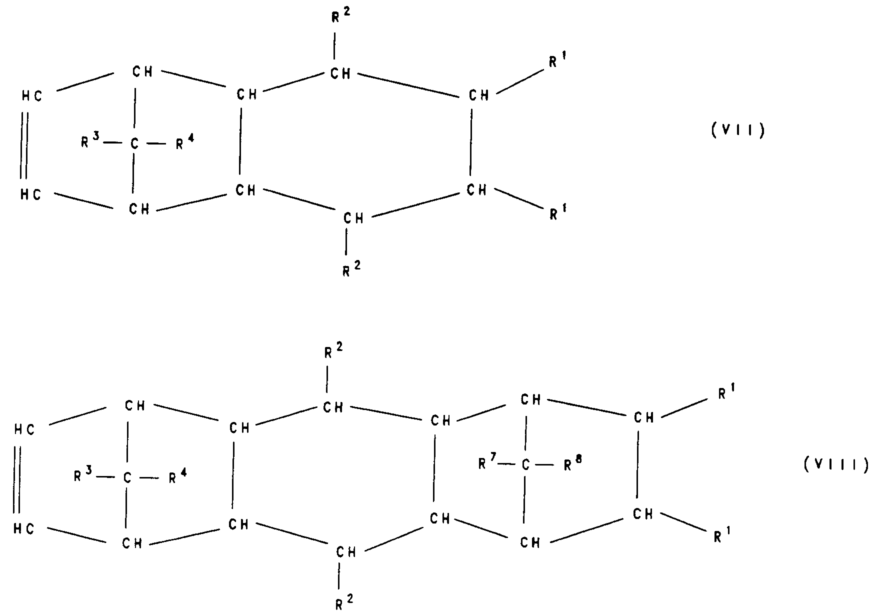
worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, und mindestens einem Olefin, das ausgewählt wird aus der Gruppe der Monocycloolefine der Formel (IX) 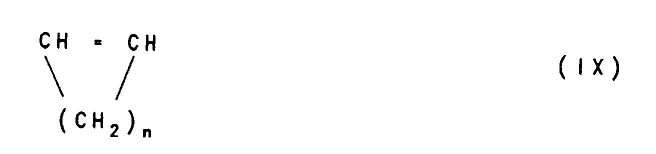 worin n eine Zahl von 2 bis 10 ist,
und/oder der Gruppe der acyclischen Olefine der Formel (X) 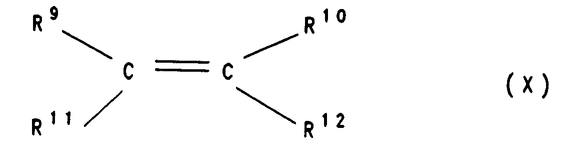 worin R⁹, R¹⁰, R¹¹ und R¹² gleich oder verschieden sind und ein Wasserstoffatom oder einen C₁-C₈-Alkylrest oder C₆-C₁₂-Arylrest bedeuten, aufgebaut sind.

3. Mischung nach Anspruch 1 oder 2, dadurch gekennzeichnet, daß sie die Polyarylensiloxankomponente (b) in einer Menge von 0,1-15 Gew.-%, bezogen auf die Summe der Komponenten (a) und (b), enthält.

4. Mischung nach einem oder mehreren der vorhergehenden Ansprüche, dadurch gekennzeichnet, daß die Polyarylensiloxane (b) ein mittleres Molgewicht (Mₙ) von 600-25000 g/mol haben.

5. Mischung nach einem oder mehreren der vorhergehenden Ansprüche, dadurch gekennzeichnet, daß sie eine Schmelzviskosität von weniger als 150 Pas aufweist.

6. Verfahren zur Darstellung von Formkörpern, dadurch gekennzeichnet, daß eine Mischung nach einem oder mehreren der vorhergehenden Ansprüche durch Spritzguß in die gewünschte Form gebracht wird.

7. Formkörper, dargestellt aus einer Mischung nach einem oder mehreren der Ansprüche 1 bis 5.
